# EUROPÄISCHE PATENTSCHRIFT

(11) **EP 0 641 687 B1**
(45) Veröffentlichungstag und Bekanntmachung des Hinweises auf die Patenterteilung: **03.01.2001**
(21) Anmeldenummer: 94113159.1
(22) Anmeldetag: 23.08.1994
(51) Int. Cl.: B60R 19/03, B60R 19/52

(54) **Stoss- und/oder schlagabsorbierendes Bauteil, insbesondere Frontschutzbügel und Verfahren zu dessen Herstellung**
Impact and/or shock absorbing component, in particular nudge bar and method of producing the same
Elément amortisseur de chocs et/ou d'impacts en particulier barre de protection avant et procédé pour sa fabrication

(30) Priorität: 23.08.1993 DE 4328309
(43) Veröffentlichungstag der Anmeldung: 08.03.1995
(73) Patentinhaber: FOR Kunststofftechnik Gesellschaft m.b.H., 4063 Hörsching (AT)
(72) Erfinder: Haslbeck, Norbert, D-84453 Mühldorf (DE)
(74) Vertreter: Winter, Brandl, Fürniss, Hübner, Röss, Kaiser, Polte Partnerschaft

(56) Entgegenhaltungen:
- WO-A-91/01904
- WO-A-93/15933
- FR-A- 2 195 761
- FR-A- 2 258 987
- FR-A- 2 266 595
- US-A- 1 623 404
- US-A- 3 850 474
- US-A- 5 141 273

## Beschreibung

Die Erfindung bezieht sich auf ein stoß- und/oder schlagabsorbierendes, verstrebtes Bauteil, insbesondere in der Ausgestaltung als Frontschutzbügel, das über eine Halterung an tragenden Teilen einer Kraftfahrzeugkarosserie befestigbar ist, gemäß dem Oberbegriff des Patentanspruchs 1. Die Erfindung betrifft ferner ein Verfahren zur Herstellung eines solchen Bauteils gemäß dem Oberbegriff des Patentanspruchs 16.

Derartige Bauteile werden in immer größerem Umfang eingesetzt, wobei manche Automobilhersteller bereits dazu übergegangen sind, solche Bauteile auch in der Ausgestaltung als Frontschutzbügel serienmäßig an den Fahrzeugen anzubringen. Diese Bauteile haben als Frontschutzbügel oder als Unterfahrschutzteile an der Frontseite des Kraftfahrzeugs im besonderen Maße bei Gelände- bzw. Off-Road-Fahrzeugen nicht nur die Funktion, solche Teile der Kraftfahrzeugkarosserie, die durch Steinschlag oder dergleichen beschädigt werden können, zu schützen. Diese Teile werden darüber hinaus in vielen Fällen bereits dazu herangezogen, andere wichtige Funktionsteile des Fahrzeugs, wie z. B. Scheinwerfer, Richtungsanzeiger, die Kühlerpartie, den Motor, die Ölwanne und dergleichen vor Schlageinwirkungen wirksam zu schützen. Diese Aufgabe bestimmt auch das Beanspruchungsprofil solcher Bauteile bzw. Schutzbügel, die folglich zunächst eine hohe Steifigkeit haben müssen, auf der anderen Seite jedoch so gestaltet sein sollen, daß sie an tragenden Teilen der Kraftfahrzeugkarosserie vibrationsarm befestigt werden können, und zwar so, daß sich ein optimaler Kraftfluß vom Frontschutzbügel über die Ankopplungsstelle in die Fahrzeugkarosserie ergibt.

Aus dem deutschen Gebrauchsmuster DE 91 05 739 U ist bereits ein stoß- und/oder schlagabsorbierendes Bauteil in der Ausgestaltung als Frontschutzbügel gemäß dem Oberbegriff des Patentanspruchs 1 bekannt geworden. Dieser Frontschutzbügel hat im Vergleich zu Rohrkonstruktionen, die ausschließlich aus Metall bestehen, eine Reihe von Vorzügen und er zeichnet sich bei wirtschaftlicher Herstellbarkeit insbesondere dadurch aus, daß er sich optimal in die Front von unterschiedlichst gestalteten bzw. gestylten Kraftfahrzeugen unter Berücksichtigung der jeweiligen Ankopplungspunkte an die Karosserie einerseits und der Umströmungsverhältnisse andererseits eingliedern läßt. In diesem bekannten Fall besteht der im Inneren des verstrebten Bauteils liegende Kern aus einem metallischen Gerüst, und der diesen Kern umgebende Körper wird von einem Integral-Schaumsystem gebildet. Hierdurch ergibt sich der Vorteil, daß das metallische Gerüst hinsichtlich Materialwahl und Formgebung so aufgezogen werden kann, daß es den individuellen Festigkeitsanforderungen und Kraftfluß-Bedingungen optimal angepaßt ist. Die Integral-Schaumsystem-Umhüllung entzieht die einzelnen metallischen Komponenten vollständig der Sicht, so daß das äußere Erscheinungsbild des Frontschutzbügels primär durch die Umhüllung geprägt wird. Es eröffnen sich hierdurch neue Möglichkeiten der Formgebung und der Designs für den Frontschutzbügel, der damit auch an die individuellen, jeweils vorliegenden Randbedingungen hinsichtlich der Befestigungsmöglichkeiten am Fahrzeug einerseits, der Umströmungsverhältnisse andererseits und schließlich auch des Designs des auszustattenden Fahrzeugs angepaßt werden kann. So können z. B. die die Hauptlast aufnehmenden Bauteilgruppen des metallischen Gerüstes aus einem anderen Werkstoff bzw. mit einem anderen Querschnitt ausgebildet sein als andere Bereiche des Frontschutzbügels. Dem fertigen Bügel ist eine solche, dem modernen Styling eines Off-Road-Fahrzeugs artfremde Gestaltung des Bügels nicht mehr anzusehen, weil das Gerüst mit dem Integral-Schaumsystem umhüllt ist. Die Umhüllung erfüllt neben einer stabilitätserhöhenden Funktion die weitere Aufgabe, den Frontschutzbügel in das "Gesicht" des Fahrzeugs möglichst gut einzugliedern. Gleichzeitig wirkt die Umhüllung des Gerüstes schwingungsdämpfend und somit dem Auftreten von Klapper- und Rattergeräuschen entgegen.

Mit der zunehmenden Verwendung solcher Bauteile haben sich auch die Kriterien und Anforderungen, die an solche Elemente gestellt werden, verändert. Die Automobilindustrie fordert von solchen Bauteilen über die vorstehend angesprochenen Kriterien hinaus eine immer weiter gehende Gewichtsreduzierung, gleichzeitig jedoch nach wie vor eine hohe Anpassungsfähigkeit an unterschiedlichste Gestaltungen der Frontpartie von Fahrzeugen. Es kommt hinzu, daß von solchen Bauteilen auch bei schwereren Unfällen eine absolute Splitterfreiheit des Bruchs verlangt wird, wobei allerdings nach wie vor das äußere Erscheinungsbild des stoß- und/oder schlagabsorbierenden Bauteils wie z. B. des Frontschutzbügels optimal an die betreffende Partie der Karosserie anpaßbar sein soll. Im Zuge der Kostenminimierung wird an die stoß- und/oder schlagabsorbierenden Bauteile darüber hinaus auch die Anforderung einer besonders wirtschaftlichen Herstellbarkeit gestellt.

Der Erfindung liegt deshalb die Aufgabe zugrunde, ein stoß- und/oder schlagabsorbierendes Bauteil, beispielsweise in der Ausgestaltung eines Frontschutzbügels, gemäß dem Oberbegriff des Patentanspruchs 1 zu schaffen, das nach wie vor die Vorzüge des gattungsbildenden Standes der Technik hat, darüber hinaus jedoch in großen Stückzahlen wirtschaftli- cher herstellbar ist, wobei das Gewicht bei vorgegebener Form- und Bruchfestigkeit verringert ist und die Anforderungen an einen splitterfreien Bruch auch bei tiefen Temperaturen erfüllt werden sollen. Eine weitere Aufgabe besteht darin, ein Verfahren zur Herstellung solcher Bauteile zu schaffen, das sich auch bei großen Stückzahlen durch eine hohe Wirtschaftlichkeit auszeichnet.

Diese Aufgabe wird hinsichtlich der Schaffung des stoß- und/oder schlagabsorbierenden Bauteils durch die Merkmale des Patentanspruchs 1 und hinsichtlich des Verfahrens durch die Merkmale des Patentanspruchs 17 bzw. des Patentanspruchs 19 gelöst.

Zwar ist es im Stand der Technik bereits bekannt, Kunststoffe mittels Fasern zu verstärken, wie dies z.B. der FR - A - 2 195 761 entnommen werden kann, jedoch bilden diese bekannten Faserverstärkungen lediglich eine zweidimensionale Versteifung, welche im wesentlichen in Faserrichtung wirkt. Das mit dieser Verstärkung versehene Bauteil wirkt als energieverzehrende Vorrichtung, die am Kraftfahrzeug derart befestigt wird, dass die Aufprallenergie durch seinen Verformungswiderstand absorbierbar ist. Allen Ausführungsformen ist gemeinsam, dass die einzelnen Streben des Bauteils jeweils hohl sind und einen U-förmigen Querschnitt haben, wobei die freien Schenkel des U mittels Metallklammern abgeschlossen und am Fahrzeug befestigt sind. Dieses Bauteil ist somit nur mit entsprechender großflächiger Abstützung an der Frontpartie des Fahrzeugs befestigbar, wodurch das Einsatzgebiet dieses Bauteil beschränkt bleibt. Im übrigen ist eine bei diesem Bauteil verwendete flächige Versteifung nicht geeignet, um eine ausreichende Stabilität für ein stoß- und/oder schlagabsorbierendes Bauteil mit frei auskragenden Streben zu schaffen. Daher fanden derartige Verstärkungsprinzipien in den Eingangs angeführten Anwendungsfällen kaum Verwendung und mußten in der Praxis den Metallrohrkonstruktionen weichen.

Die Erfindung basiert dagegen auf dem Konzept, dem stoßabsorbierenden Material, das mit einem vollen Querschnitt vorliegt, ein innenliegendes Stützkorsett zu geben, das nicht mehr nur in einem Zentrumsbereich vorliegt, sondern das flächenerfassend im Inneren des stoßabsorbierenden Materials so angeordnet ist, daß eine möglichst große Oberfläche entsteht, über die eine Versteifung des stoßabsorbierenden Materials erfolgen kann. Auf diese Weise kann ein im Vergleich zu bekannten Lösungen wesentlich größerer Querschnitt der Strebe versteift werden, und zwar durch die erfindungsgemäßen Maßnahme dadurch noch effektiver, weil das energieabsorbierende Material in die Struktur des Kerns zumindest bereichsweise eindringt. Die einzelne Strebe des Bauteils wird damit nicht nur in einem Teilbereich, sondern insgesamt schlagfester und biegesteifer, wobei sich gleichzeitig der Vorteil einer erheblichen Gewichtsreduzierung im Vergleich zu herkömmlichen Lösungen mit einem metallischen Gerüst ergibt. Durch die Versteifung des Mantels über einen vergrößerten Bereich des Querschnitts läßt sich darüber hinaus ein Bruchverhalten erzielen, daß selbst bei tiefen Temperaturen nicht zum Splittern tendiert, so daß die verkehrs- und sicherheitstechnischen Anforderungen mit Leichtigkeit erfüllt werden können. Dabei kann der Mantel nach wie vor aus einem verhältnismäßig elastischen Material gebildet werden, so daß nach wie vor ein Aufprallschutz für Fußgänger zur Verringerung der Verletzungsgefahr sichergestellt ist. Als Verfahren zur Herstellung des Bauteils kann nach wie vor ein Urformprozeß Anwendung finden, der auch bei großen Stückzahlen eine wirtschaftliche Herstellung garantiert. Vorteilhafte Ausgestaltungen der Erfindung sind Gegenstand der Unteransprüche.

Der erfindungsgemäße Aufbau des Bauteils hat dabei im Vergleich zum Stand der Technik den besonderen, verfahrenstechnischen Vorteil, daß zur Erzielung einer hohen Bauteil-Stabilität ausschließlich sogenannte "artreine" Werkstoffe, wie z. B. Kunststoff der selben Gruppe oder Kunststoffe aus Gruppen verwendet werden können, die ggf. nach dem Aufmahlen oder Schreddern ohne weitere Sortierungs-Zwischenschritte einem Recycling-Verfahren zugeführt werden können. Über das in die Struktur des Kerns zumindest bereichsweise eindringende, energieabsorbierende Material läßt sich nach wie vor mit Leichtigkeit jede gewünschte, an das Kraftfahrzeug angepaßte Formgebung erzielen, die den Vorschriften im Straßenverkehr, wie sie in EG-Richtlinien aufgestellt sind, entsprechen. Auch läßt sich über diese Ummantelung des Kerns das Energieabsorptionsvermögen gut einstellen.

Mit der Wahl des Werkstoffs für das nichtmetallische Gerüst gemäß Patentanspruch 3 läßt sich die Festigkeit des Bauteils besonders gut steuern, indem die flächige oder schlauchförmige Gewebe- oder Gelegestruktur in der betreffenden, zu versteifenden Strebe so gelegt bzw. orientiert und/oder zu anderen versteifenden Strukturen ausgerichtet wird, daß dem betreffenden Beanspruchungsprofil der Strebe optimal Rechnung getragen ist.

Nichtmetallische Gerüste in Form einer flächigen oder schlauchförmigen Gewebe- oder Gelegestruktur aus Glasfasern, Kevlar®-Fasern (Aramid-Fasern), Kohlenstoff- oder Textil-Fasern lassen sich durch geeignete Werkzeuge, die vorzugsweise beheizt sind, und ggf. nach Durchführung besonderer Verfahrenssschritte wie z. B. durch eine Behandlung mit einem geeigneten Tränkmittel, wie z. B. einem Kunstharz, zu einem selbsttragenden Gerüst-Bauteil verformen, das dann in die Produktionsform des Frontschutzbügels eingelegt werden kann. Der Gerüst-Formkörper wird dann in der Form durch geeignete Haltemittel, beispielsweise in Form von verlorenen Kunststoff-Stiften, deren Material an den Werkstoff der übrigen Komponenten vorzugsweise angepaßt ist, in der Produktionsform fixiert und anschließend mit dem energieabsorbierenden Material umschlossen, was beispielsweise durch einen Gießvorgang oder durch einen Schäumvorgang geschehen kann. Es hat sich gezeigt, daß für eine ausreichende Festigkeitssteigerung des verstrebten Bauteils bereits eine sehr geringe Masse des nichtmetallischen Gerüsts ausreicht, so daß beispielsweise bei Verwendung einer GFK (Glas-Faser verstärkter Kunststoff)-Matte für die Kernstruktur und bei Umschäumung dieser Masse mit einem Polyurethan-Kunststoffsystem ohne weiteres ein unmittelbares Recycling des so hergestellten Bauteils möglich ist.

Mit der Weiterbildung gemäß Anspruch 5 läßt sich die Bruch- und Schlagfestigkeit des Bauteils auf einfache Weise steuern, und zwar vorzugsweise mit den Maßnahmen gemäß Anspruch 7.

Durch geeignete Behandlung des festigkeitserhöhenden Kerngerüsts läßt sich die Verbindung zu dem es umschließenden, stoßabsorbierenden Material beeinflussen, um dadurch die festigkeitserhöhende Wirkung des Kerngerüsts zu verstärken.

Vorteilhafterweise besteht das stoßabsorbierende Material aus einem Polyurethan-Kunststoff-System, das als Gieß- oder Schäummasse vorliegen kann. Mit dieser Masse lassen sich mit Leichtigkeit die vom Technischen Überwachungsverein (TÜV) vorgeschriebenen Radien (≥ 5 mm) einhalten. Darüber hinaus ergibt sich damit eine sehr hohe Formstabilität im vorgeschriebenen Temperaturbereich von -35°C bis +85°C, sowie eine absolut splitterfreie Brucheigenschaft. Mit diesem Kunststoffsystem läßt sich darüber hinaus die Härte in einem weiten Bereich steuern, so beispielsweise im Bereich zwischen 50 und 100 SHORE.

Das Bauteil kann auch gänzlich auf der Basis von Nylon (Anspruch 10) aufgebaut sein, was zu einer weitere Vereinfachung des Recycling führt.

Mit der Weiterbildung des Anspruchs 11 läßt sich die stoßabsorbierende Wirkung aber auch die Bruchfestigkeit des Bauteils weiter günstig beeinflussen.

Wenn die die einzelnen Streben durchziehenden Gerüststränge zusammenhängen, ergibt sich eine weitere Vereinfachung des Herstellungsverfahrens, da das komplette Gerüst als separates Bauteil gehandelt, beispielsweise auch gestaltet werden kann.

Weitere vorteilhafte Ausgestaltungen sind Gegenstand der übrigen Unteransprüche. Nachstehend werden anhand schematischer Zeichnungen mehrere Ausführungsbeispiele der Erfindung näher erläutert. Es zeigen:
- Fig. 1: eine perspektivische Ansicht einer ersten Ausführungsform des stoß- und schlagabsorbierenden Bauteils in der Ausgestaltung als Frontschutzbügel;
- Fig. 2-6: Schnittansichten bei Schnittführungen entlang den Linien II-II, III-III, IV-IV, V-V und VI-VI in Fig. 1, wobei in den Schnitten unterschiedliche, mögliche Varianten für den Aufbau des Kerngerüstes erläutert werden;
- Fig. 7: eine der Fig. 1 ähnliche Darstellung einer weiteren Ausführungsform des Frontschutzbügels;
- Fig. 8-13: Schnittansichten der Streben des Frontschutzbügels gemäß Fig. 7 mit Schnittführungen entlang den Linien VIII-VIII, IX-IX, X-X, XI-XI, XII-XII und XIII-XIII in Fig. 7;
- Fig. 14: eine schematische Seitenansicht eines Frontschutzbügels mit einer erfindungsgemäßen Befestigung an einem Längsträger des Fahrzeugs;
- Fig. 15: einen Schnitt durch eine Strebe mit einer modifizierten Anordnung des Kerngerüsts;
- Fig. 16: in vergrößertem Maßstab die Darstellung der die Basis des Kerngerüsts bildenden Gelegestruktur zur Veranschaulichung der Verbindung zu der es umgebenden stoßabsorbierenden Masse;
- Fig. 17: eine der Fig. 15 ähnliche Ansicht einer weiteren Ausgestaltung des Strebenquerschnitts; und
- Fig. 18: eine Darstellung eines Schnitts durch die Strebe mit einem modifizierten Aufbau.

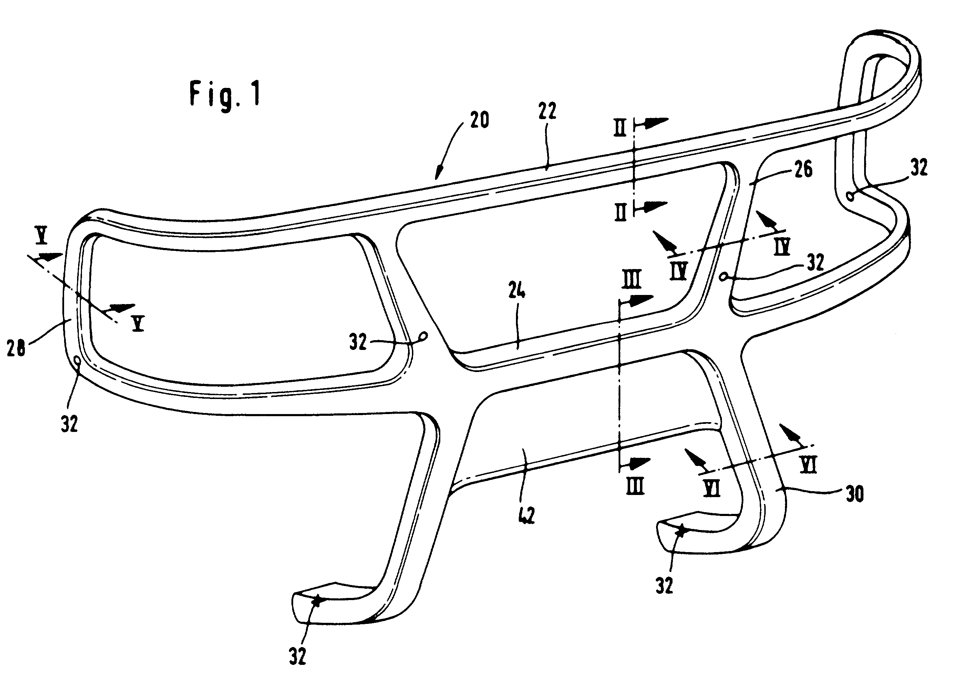

Fig. 1 zeigt einen voll aus Kunststoff bestehenden Frontschutzbügel 20 in der Form eines verstrebten Bauteils. Einige Strebenabschnitte sind bezeichnet mit den Bezugszeichen 22 bis 30. Befestigungspunkte des Frontschutzbügels am Kraftfahrzeug sind mit dem Bezugszeichen 32 versehen. An diesen Stellen sind in die Kunststoffmasse stabilere, vorzugsweise metallische Befestigungselemente wie z. B. in Form von Gewindebuchsen eingegossen, über die dann die Befestigung an den tragenden Teilen der Kraftfahrzeugkarosserie erfolgt.

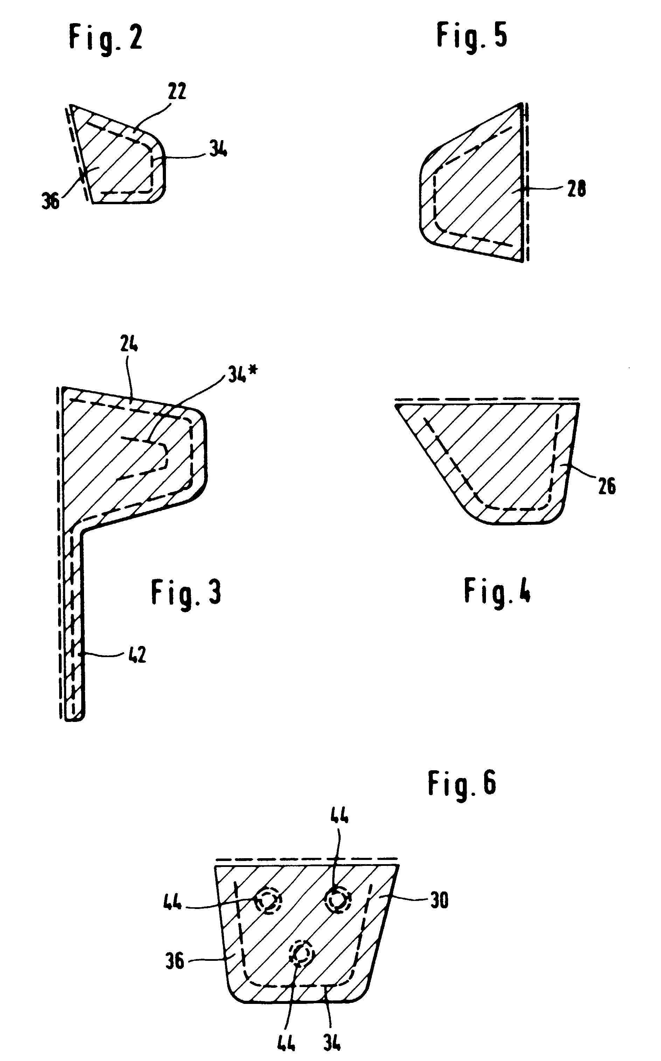

Fig. 1 läßt erkennen, daß es sich bei dem Frontschutzbügel um eine relativ komplexe räumliche Struktur handelt, wobei den einzelnen Streben 22 bis 30 aufgrund ihrer Lage und Ausrichtung ein unterschiedliches Aufgaben- und Beanspruchungsprofil zugeordnet ist. Allen Abschnitten des Bauteils ist gemeinsam, daß sie eine hohe Formstabilität in einem weiten Temperaturbereich von etwa -40°C bis +85°C und eine splitterfreie Brucheigenschaft bei hoher Festigkeit aufweisen müssen. Um diese Eigenschaften bei einem wirtschaftlichen Herstellungsverfahren bereitstellen zu können, hat der Frontschutzbügel im Bereich sämtlicher Streben 22 bis 30 einen besonderen Aufbau (vgl. Fig. 2 bis 6) mit einem innenliegenden Kern 34 in Form eines flächenerfassenden Gerüsts, das zur Ausbildung eines Vollquerschnitts allseitig von einem energieabsorbierenden Material 36 eingeschlossen ist. Das flächenerfassende Gerüst 34 ist in den Figuren jeweils mit gestrichelten Linien angedeutet. Die gestrichelte Linie außerhalb des Querschnitts bringt zum Ausdruck, wo sich die betreffende Rückseite der Strebe befindet.

Das Gerüst des Kerns 34 besteht aus einem nichtmetallischen Werkstoff, der zumindest im Verbund mit dem ihn einschließenden Material 36 eine hohe Bruchzähigkeit und eine hohe Schlagfestigkeit aufweist. Der Kern 34 ist darüber hinaus so beschaffen, daß das Material 36, welches aus einem energieabsorbierenden Material besteht, vorzugsweise vollflächig, zumindest jedoch bereichsweise in die Struktur des Kerns 34 eindringen kann. Schließlich sind die Materialien für den Kern 34 und die ihn umgebende Masse 36 so gewählt, daß eine für das Recycling erforderliche Artenreinheit sichergestellt ist, so daß der gesamte Frontschutzbügel 20 nach einem Aufmahl- oder Schredderprozeß ohne weitere Trennungsschritte einem Recycling zugeführt werden kann.

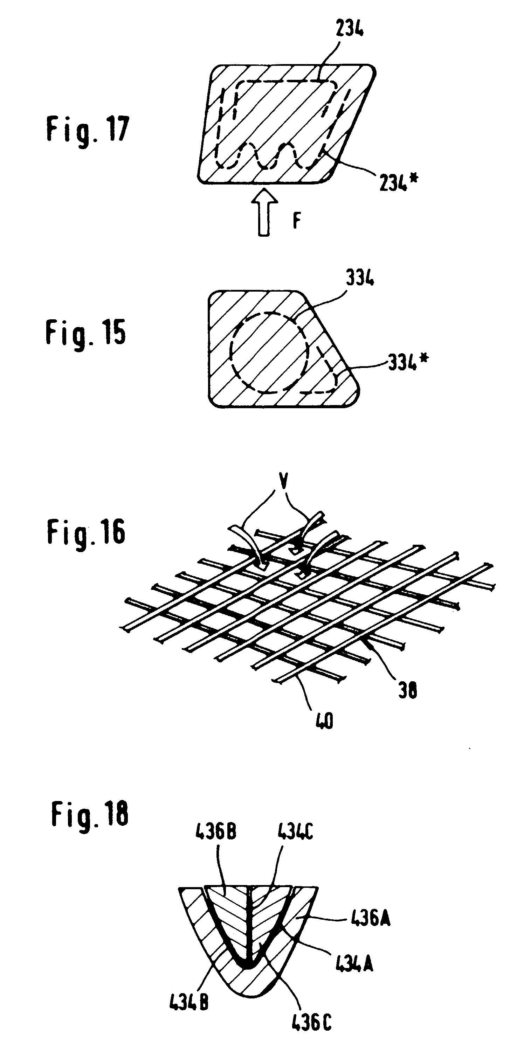

In den Figuren 2 bis 6 sind unterschiedliche Gestaltungen des Kern dargestellt. Es soll jedoch an dieser Stelle hervorgehoben werden, daß es selbstverständlich auch möglich ist, im Bereich sämtlicher Streben mit ein und dem selben Profil des Kerns 34 zu arbeiten. Das nichtmetallische Gerüst ist - wie die Figuren 2 bis 6 erkennen lassen, beispielsweise von einer flächigen Gewebe- oder Gelegestruktur 38 gebildet (siehe Fig. 16). Diese Gewebe- oder Gelegestruktur besteht aus hochfesten Fasern 40, die sich in das energieabsorbierende Material 36 so eingliedern lassen, daß eine sehr innige Verbindung zwischen den Materialien vorzugsweise über die gesamte Oberfläche erfolgt. Mit den Pfeilen V in Fig. 16 ist angedeutet, wie sich die energieabsorbierende Masse 36 mit der nichtmetallischen Gewebe- oder Gelegestruktur 38 verbindet, d. h. wie die energieabsorbierende Masse die Kernstruktur umschließt, wodurch sich der Versteifungseffekt bei minimalem Materialverbrauch optimieren läßt.

In den Figuren 2 bis 6 sind unterschiedliche räumliche Orientierungen des Kerns 34 angedeutet, wobei diese Orientierungen in den einzelnen Querschnitt dem betreffenden Beanspruchungsprofil angepaßt ist. So zeigt beispielsweise Fig. 3, daß der Kern 34 in den Bereich eines vertikalen Querschnittsflügels 42 hineinverlagert ist, der später das Nummernschild des Kraftfahrzeugs tragen soll. Da die Strebe 24 bei der Struktur nach Fig. 1 bei einem Aufprall sehr hoch beansprucht sein wird, ist der Kern 34 in diesem Bereich zusätzlich durch ein weiteres Kerngerüst 34* versteift. Dieser Effekt kann selbstverständlich auch durch andere Maßnahmen erzielt werden, die später noch anhand der Figuren 15 und 17 erläutert werden sollen.

Die Fasern 40 bestehen aus hochfesten, vorzugsweise zugund dehnungsfesten Fasern, wie z. B. Glas-Fasern, hochfesten Kunststoff-Fasern, wie z. B. Kevlar®-Fasern, d. h. Aramid-Fasern mit hohem Dehnungswiderstand und großer Festigkeit und Biegsamkeit, Kohlenstoff-Fasern oder Textil-Fasern, wobei auch eine Mischung der Fasern verwendet werden kann. Vorzugsweise werden dabei Matten verwendet, die sich unter Temperatureinwirkung in eine bestimmte Profilform bringen lassen. Es ist auch möglich, anstelle von flächigen Gewebe- oder Gelegestrukturen, schlauchförmige Strukturen anzuwenden.

Das stoßabsorbierende Material besteht vorzugsweise ebenfalls aus einem Kunststoffsystem, wobei sich beispielsweise mit Polyurethan-Kunststoffsysteme gute Ergebnisse haben erzielen lassen. Polyurethan-Systeme lassen sich durch Umgießen oder Umschäumen beispielsweise in Mehrkomponententechnik herstellen. Über die in die Form eingebrachte Masse kann ein Fluß auf die Dichte über den Querschnitt der Strebe genommen werden, so daß es beispielsweise gelingt, im äußeren Bereich eine höhere Dichte als im inneren Bereich bereitzustellen. Es ist jedoch gleichermaßen möglich, die energieabsorbierende Masse 36 aus dem Kunststoffbereich der Polyamide auszuwählen. In beiden Fällen ergibt sich in Verbindung mit der Kernstruktur nicht nur eine hohe Schlag- und Stoßfestigkeit, sondern darüber hinaus auch ein absolut splitterfreies Bruchverhalten.

Die Figuren 2 bis 6 lassen erkennen, daß es selbstverständlich möglich ist, den Kern 34, 34* im Inneren des von der Masse 36 gebildeten Vollprofils beliebig räumlich zu krümmen, um dadurch Einfluß auf die Festigkeit des betreffenden Strebenquerschnitts nehmen zu können.

Anstelle des oder in Kombination mit der flächigen oder schlauchförmigen Gewebe- oder Gelegestruktur 38 kann - wie Fig. 6 zeigt - auch ein anderes Gerüst in Form eines im Querschnitt der Strebe 30 liegenden Bündels aus Glas-Fasern und/oder Kunststoff-Fasern und/oder Aramid-Fasern (Kevlar®-Fasern) und/oder Carbon-Fasern und/oder Textil-Fasern verwendet werden. Diese Bündel sind in Fig. 6 mit 44 bezeichnet und auch in diesem Fall erfolgt eine zumindest bereichsweise Durchdringung der Bündel 44 mit dem sie einschließenden energieabsorbierendem Material 36. Diese Bündel 44 lassen sich darüber hinaus sowohl in Längsrichtung geeignet umformen als auch relativ zueinander so anordnen, daß das gewünschte Festigkeitsprofil erreicht wird.

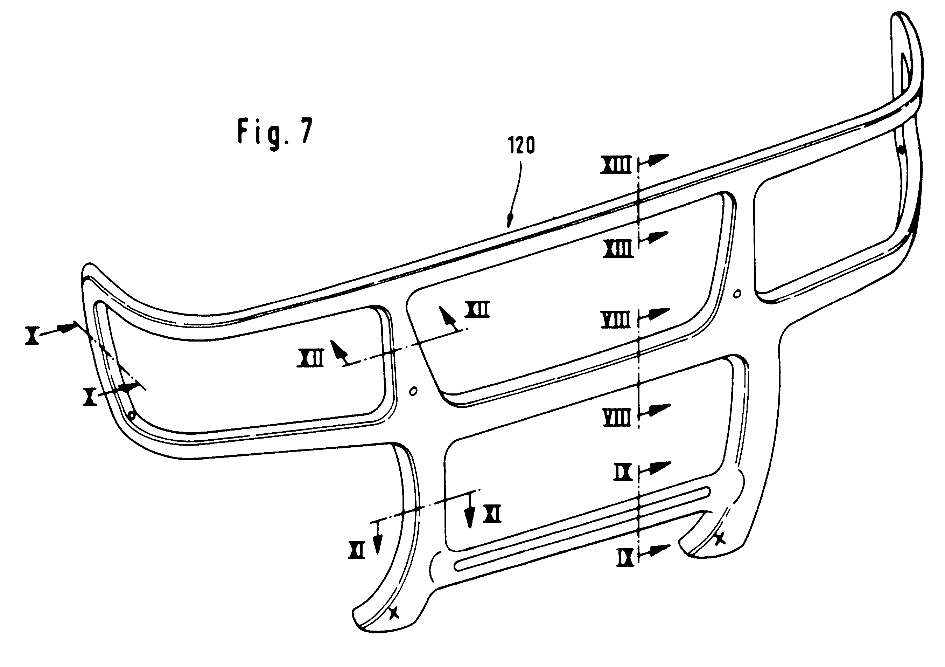

Die Ausführungsform nach den Figuren 7 bis 13 ist derjenigen gemäß Fig. 1 bis 6 ähnlich. Entsprechende Teile und Komponenten sind deshalb auch mit ähnlichen Bezugszeichen versehen, denen lediglich eine "1" vorangestellt ist. Die Beschreibung kann deshalb kurz gehalten werden.

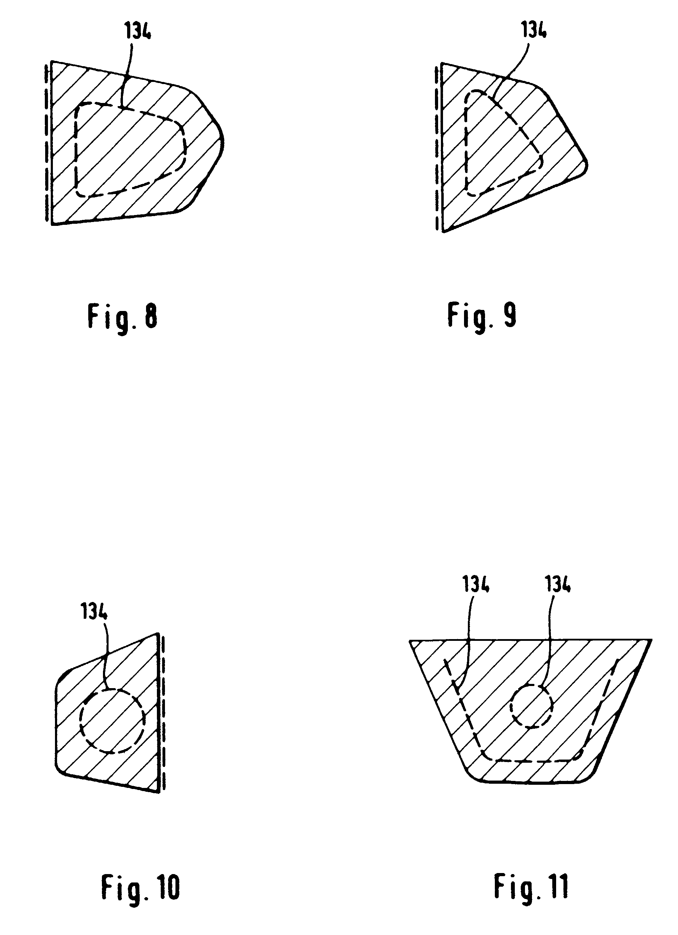

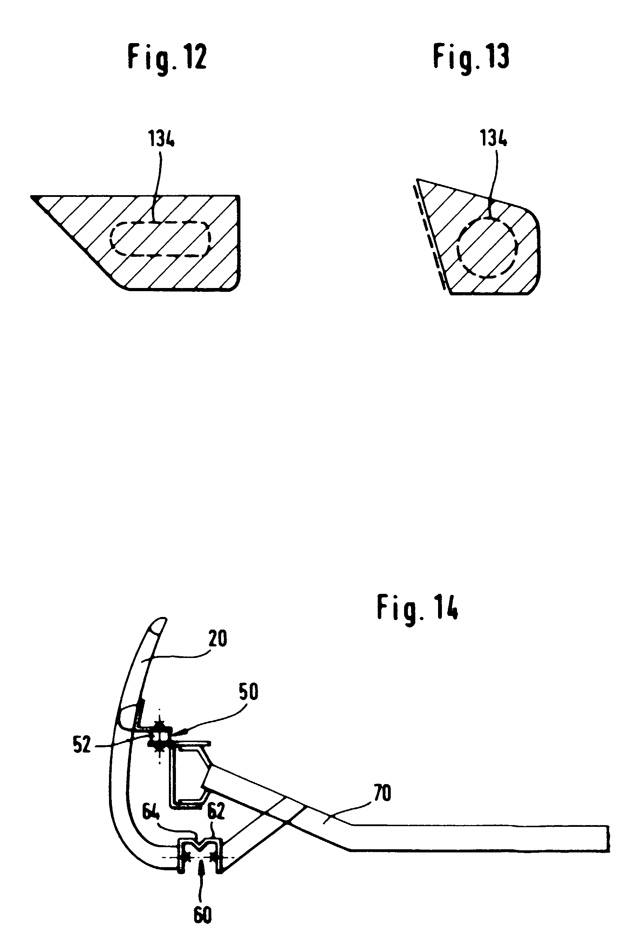

Abweichend von der Ausführungsform nach den Figuren 1 bis 6 wird das nichtmetallische Gerüst (134) hier von einer schlauchförmigen Gewebe- oder Gelegestruktur gebildet, sie kann jedoch auch mit einer Gewebe- oder Gelegestruktur in der Ausgestaltung nach den Figuren 1 bis 6 kombiniert werden. Die Schlauchstruktur kann darüber hinaus dem betreffenden Querschnitt des Profils angepaßt werden, was aus den Figuren 8 und 9 besonders deutlich ersichtlich ist. Die Figur 11 zeigt die Kombination eines flächigen und eines schlauchförmigen Gewebe- oder Gelegestrukturgerüsts.

In den Figuren 15 und 17 sind weitere Varianten für die Gestaltung des Kerns 234 bzw. 334 angedeutet. Der Querschnitt gemäß Fig. 17 hat auf der der Schlagseite (angedeutet durch Pfeil F) zugewandten Seite eine gewellte Formgebung, um auf diese Weise örtlich eine erhöhte Schlagfestigkeit bereitzustellen.

Bei der Ausgestaltung nach Fig. 15 ist das schlauchförmige Gerüst 334 an einer schlagempfindlichen Kante durch eine weitere flächige Struktur 334* ergänzt.

Bei der Herstellung des erfindungsgemäßen Bauteils bzw. Frontschutzbügels wird die Kernstruktur 34 durch geeignete Werkzeuge und ggf. unter Temperatureinwirkung in eine vorbestimmte Form gebracht, wie sie den Figuren 2 bis 6 und 8 bis 13 entnehmbar ist. Zu diesem Zweck können die Kernstrukturen auch mit geeigneten Mitteln wie z. B. Kunstharz getränkt werden, wobei dieses Mittel dann vorzugsweise aus den Materialien ausgewählt wird, die eine innige Verbindung mit dem Restmaterial des Querschnitts unterstützen. Die vorgeformten Kerne werden dann in die eigentliche Form wie z. B. eine Spritzgieß- oder Schäumform eingelegt und in dieser Form durch beispielsweise verlorene Haltestifte fixiert. In diesem Zustand erfolgt dann das Umgießen bzw. das Umschäumen mit energieabsorbierendem Material wie z. B. einem Polyurethan-Kunststoff oder einem Polyamid-Kunststoff.

Die Erfindung ist allerdings nicht auf diese Art und Weise der Herstellung beschränkt. Es kann auch ein anderer Schichtaufbau wie in Fig. 18 gezeigt verwendet werden. Hier findet eine Klebetechnik Anwendung, wobei sich zwischen den energieabsorbierenden Abschnitten 434A bis 434C Kernstrukturen 434A bis 434C befinden. Das auf diese Weise ausgebildete Bauteil hat bei geringem Gewicht eine solche Festigkeit, daß es durch geeignete Positionierung der Befestigungspunkte 32 einen kompletten Aufprallschutz bieten kann. In diesem Fall wird die Kernstruktur im Bereich der Befestigungspunkte 32 so gewählt und ausgebildet, daß der Kraftfluß in die Halterungen günstig wird. Es lassen sich auf diese Weise - wie in Fig. 14 gezeigt - Halterungen 50 und 60 verwenden, die ein steuerbares und ein vorbestimmtes Stoßabsorptionsverhalten haben. Die Halterung 50 verwendet hierzu ein zwischen Frontschutzbügel 20 und Längsträger 70 geschaltetes Kunststoff-Scherelement. Bei der Halterung 60 wird ein U verwendet, dessen Steg 62 eine Soll-Biegestelle 64 hat.

## Patentansprüche

1. Stoß- und/oder schlagabsorbierendes aus Streben bestehendes Bauteil, insbesondere in der Ausgestaltung als Frontschutzbügel,
wobei das Bauteil über eine Halterung an ausgewählten Punkten an tragenden Teilen einer Kraftfahrzeugkarosserie befestigbar ist und einen in den Streben liegenden dreidimensionalen Kern hat, und
wobei der Kern von einem energieabsorbierenden Material umgeben ist,
dadurch gekennzeichnet,
daß der Kern (34; 134) als flächenerfassendes Gerüst aus einem nichtmetallischen Werkstoff ausgebildet ist,
daß das energieabsorbierende Material den Kern zur Ausbildung eines Vollquerschnitts allseitig umgibt und bereichsweise bis vollflächig in die dreidimensionale Struktur des Kerns derart eindringt oder mit dieser Struktur eine derartige Verbindung eingeht,
daß das flächenerfassende Gerüst des Kerns im Verbund mit dem ihn einschließenden bzw. darin eindringenden Material (36; 136) ein bruchzähes und schlagfestes Bauteil bildet.

2. Bauteil nach Anspruch 1, dadurch gekennzeichnet, daß für das energieabsorbierende Material und für den Werkstoff des Kerns artreine Kunststoffe verwendet werden, die nach einem Zerkleinerungsprozeß ohne weitere Sortierungs-Zwischenschritte einem Recycling-Verfahren zugeführt werden können.

3. Bauteil nach Anspruch 1 oder 2, dadurch gekennzeichnet, daß das nichtmetallische Gerüst von einer flächigen oder schlauchförmigen Gewebe- oder Gelegestruktur (38) aus Glasfasern, hochfesten Kunststoff-Fasern, wie z. B. Aramid-Fasern mit hohem Dehnungswiderstand, großer Festigkeit und Biegsamkeit und/oder Kohlenstoff-(Carbon-)Fasern und/oder Textil-Fasern gebildet ist, die im Inneren des Strebenquerschnitts den Beanspruchungsprofil der betreffenden Strebe (22 bis 30; 122 bis 130) entsprechend orientiert ist.

4. Bauteil nach Anspruch 3, dadurch gekennzeichnet, daß die Gewebe- oder Gelegestruktur räumlich gekrümmt ist.

5. Bauteil nach einem der Ansprüche 1 bis 4, dadurch gekennzeichnet, daß das nichtmetallische Gerüst zumindest ein im Querschnitt der betreffenden Strebe (30) liegendes Bündel (44) aus Glasfasern und/oder Kunststoff-Fasern mit hohem Dehnungswiderstand und/oder großer Festigkeit und/oder großer Biegsamkeit wie z. B. Aramid-Fasern und/oder Kohlenstoff-Fasern und/oder Textil-Fasern aufweist, das im Inneren des Strebenquerschnitts dem Beanspruchungsprofil der Strebe (30) entsprechend orientiert und/oder ausgerichtet ist.

6. Bauteil nach Anspruch 5, dadurch gekennzeichnet, daß das zumindest eine Bündel in Längsrichtung gewellt ist.

7. Bauteil nach Anspruch 5 oder 6, dadurch gekennzeichnet, daß mehrere Bündel (44) und/oder flächige und/oder schlauchförmige Gewebe- oder Gelegestrukturen im Strebenquerschnitt (30) liegen, wobei die Relativlage der Bündel (44) und/oder flächigen Gewebe- oder Gelegestrukturen (34) zueinander dem Beanspruchungsprofil der betreffenden Strebe angepaßt ist.

8. Bauteil nach einem der Ansprüche 3 bis 7, dadurch gekennzeichnet, daß das Gerüst mit einem Mittel getränkt ist, über das die Verbindung zu dem es umschließenden, stoßabsorbierenden Material (36; 136) steuerbar ist.

9. Bauteil nach einem der Ansprüche 3 bis 8, dadurch gekennzeichnet, daß das stoßabsorbierende Material von einem Polyurethan-Kunststoffsystem, vorzugsweise einem Polyurethan-Schaumsystem gebildet ist.

10. Bauteil nach einem der Ansprüche 3 bis 8, dadurch gekennzeichnet, daß das stoßabsorbierende Material von einem Polyamid-System, vorzugsweise einem linearen, aliphatischen Polyamid wie Nylon gebildet ist, das auch die Basis für die Gewebe- oder Gelegestruktur bildet.

11. Bauteil nach Anspruch 9 oder 10, dadurch gekennzeichnet, daß das stoßabsorbierende Material von einer Kunststoffmasse gebildet ist, in die Fasern aus Glas und/oder Kunststoff mit hohem Dehnungswiderstand bzw. großer Festigkeit wie z. B. Aramid-Fasern eingearbeitet sind.

12. Bauteil nach Anspruch 11, dadurch gekennzeichnet, daß die Länge der Fasern im Bereich zwischen 0,2 und 0,6 mm liegt.

13. Bauteil nach einem der Ansprüche 1 bis 12, dadurch gekennzeichnet, daß das Gerüst vorgeformt ist.

14. Bauteil nach einem der Ansprüche 1 bis 13, dadurch gekennzeichnet, daß die die einzelnen Streben (22 bis 30) durchziehenden Gerüststränge zusammenhängen.

15. Bauteil nach einem der Ansprüche 1 bis 14, dadurch gekennzeichnet, daß das stoßabsorbierende Material von einer Schaummasse gebildet ist.

16. Bauteil nach einem der Ansprüche 1 bis 14, dadurch gekennzeichnet, daß das stoßabsorbierende Material von einer Gießmasse gebildet ist.

17. Verfahren zur Herstellung eines stoß- und/oder schlagabsorbierenden, verstrebten Bauteils nach einem der Ansprüche 1 bis 16, gekennzeichnet durch folgende Verfahrensschritte:
Umformen des Gerüsts aus nichtmetallischem, zumindest im Verbund mit dem ihn einschließenden Material bruchzähem und schlagfestem Werkstoff in eine zusammenhängende Seelenstruktur vorzugsweise unter Temperatureinwirkung und ggf. nach Durchführung eines Tränkvorgangs mit einem die innere und/oder die Bindung zur Umgebung und/oder die Formstabilität steuernden Mittel;
Fixieren des Gerüsts in einer Form mittels verlorener Haltemittel; und
Umgießen oder Umschäumen des Gerüsts mit einer Masse, die im verfestigten Zustand stoß- und/oder schlagabsorbierende Eigenschaften hat.

18. Verfahren nach Anspruch 17, dadurch gekennzeichnet, daß das Umgießen des Gerüsts mit einem Mehrkomponenten-Kunststoffsystem erfolgt.

19. Verfahren zur Herstellung eines stoß- und/oder schlagabsorbierenden, verstrebten Bauteils nach einem der Ansprüche 1 bis 16, gekennzeichnet durch folgende Verfahrensschritte:
Umformen des Gerüsts aus nichtmetallischem, zumindest im Verbund mit dem ihn einschließenden Material bruchzähem und schlagfestem Werkstoff; und
schichtweises Umgeben des Gerüsts mit stoßabsorbierendem Material, bis der Sollquerschnitt der betreffenden Strebe erreicht ist.

20. Verfahren nach Anspruch 19, dadurch gekennzeichnet, daß zwischen den Schichten aus stoßabsorbierendem Material weitere Schichten aus bruchzähem und/oder schlagfestem Werkstoff aufgebracht werden.

21. Bauteil nach einem der Ansprüche 1 bis 16, als Frontschutzbügel mit zugehöriger Halterung am Fahrzeug, mit im Bauteil verankerten Halteelementen, wie z. B. Platten, Stiften oder dergleichen, dadurch gekennzeichnet, daß die Halteelemente an stoßabsorbierenden Elementen (50, 60) mit vorbestimmtem Verformungs-und/oder Stoßabsorptionsverhalten befestigt sind.

## Claims

1. A shock- and/or impact-absorbent component comprising bars, in particular in the form of a front protection guard assembly,
wherein the component can be secured by way of a holder at selected points to load-bearing parts of a motor vehicle body and has a three-dimensional core in the bars, and
wherein the core is surrounded by an energy-absorbent material,
characterised in that
the core (34; 134) is in the form of a surface-engaging support structure comprising a non-metal material, and
the energy-absorbent material surrounds the core on all sides to form a full cross-section and in a region-wise manner to over the full surface area penetrates into the three-dimensional structure of the core in such a way or is involved in a connection to said structure of such a nature
that the surface-engaging support structure of the core in conjunction with the material (36; 136) which encloses it or penetrates thereinto forms a fracture-resistant and impact-resistant component.

2. A component according to claim 1 characterised in that plastics materials of the same category are used for the energy-absorbent material and for the material of the core, which plastics materials can be fed to a recycling process after a grinding process without further intermediate sorting steps.

3. A component according to claim 1 or claim 2 characterised in that the non-metal support structure is formed by a flat or tubular cloth or laid structure (38) of glass fibres, high-strength plastics fibres such as for example aramid fibres with a high level of stretch resistance, great strength and flexibility and/or carbon fibres and/or textile fibres, which in the interior of the bar cross-section is oriented in accordance with the loading profile of the bar (22 to 30, 122 to 130) in question.

4. A component according to claim 3 characterised in that the cloth or laid structure is spatially curved.

5. A component according to one of claims 1 to 4 characterised in that the non-metal support structure has at least one bundle (44), in the cross-section of the bar (30) in question, comprising glass fibres and/or plastics fibres with a high level of stretch resistance and/or great strength and/or great flexibility such as for example aramid fibres and/or carbon fibres and/or textile fibres, which in the interior of the bar cross-section is oriented and/or aligned in accordance with the loading profile of the bar (30).

6. A component according to claim 5 characterised in that the at least one bundle is corrugated in the longitudinal direction.

7. A component according to claim 5 or claim 6 characterised in that a plurality of bundles (44) and/or flat and/or tubular woven or laid structures are disposed in the bar cross-section (30), wherein the relative position of the bundles (44) and/or flat woven or laid structures (34) relative to each other is adapted to the loading profile of the bar in question.

8. A component according to one of claims 3 to 7 characterised in that the support structure is impregnated with an agent by way of which the connection to the shock-absorbent material (36; 136) enclosing it can be controlled.

9. A component according to one of claims 3 to 8 characterised in that the shock-absorbent material is formed by a polyurethane plastics system, preferably a polyurethane foam system.

10. A component according to one of claims 3 to 8 characterised in that the shock-absorbent material is formed by a polyamide system, preferably a linear aliphatic polyamide such as nylon, which also forms the basis for the cloth or laid structure.

11. A component according to claim 9 or claim 10 characterised in that the shock-absorbent material is formed by a plastics mass into which are incorporated fibres of glass and/or plastics material with a high level of stretch resistance or great strength such as for example aramid fibres.

12. A component according to claim 11 characterised in that the length of the fibres is in the range of between 0.2 and 0.6 mm.

13. A component according to one of claims 1 to 12 characterised in that the support structure is preformed.

14. A component according to one of claims 1 to 13 characterised in that the support structure elongate portions which pass through the individual bars (22 to 30) are connected.

15. A component according to one of claims 1 to 14 characterised in that the shock-absorbent material is formed by a foam mass.

16. A component according to one of claims 1 to 14 characterised in that the shock-absorbent material is formed by a cast mass.

17. A process for the production of a shock- and/or impact-absorbent, braced component according to one of claims 1 to 16, characterised by the following steps:
shaping the support structure of non-metal material which at least in conjunction with the material enclosing it is fracture-resistant and impact-resistant into an interconnected internal core structure, preferably under the action of temperature and possibly after implementing an impregnation procedure with an agent for controlling the interior and/or the bonding to the surroundings and/or the stability in respect of shape;
fixing the support structure in a mould by means of lost holding means; and
casting or foaming around the support structure with a mass which in the solidified condition has shock- and/or impact-absorbent properties.

18. A process according to claim 17 characterised in that the operation of casting around the support structure is effected with a multi-component plastics material system.

19. A process for the production of a shock- and/or impact-absorbent, braced component according to one of claims 1 to 16, characterised by the following steps:
shaping the support structure of non-metal material which at least in conjunction with the material enclosing it is fracture-resistant and impact-resistant; and
surrounding the support structure in layer-wise manner with shock-absorbent material until the desired cross-section of the bar in question is reached.

20. A process according to claim 19 characterised in that disposed between the layers of shock-absorbent material are further layers of fracture-resistant and/or impact-resistant material.

21. A component according to one of claims 1 to 16 as a front protection guard assembly with associated holder on the vehicle, with holding elements which are anchored in the component such as for example plates, pins or the like, characterised in that the holding elements are fixed to shock-absorbent elements (50, 60) with a predetermined deformation and/or shock-absorption characteristic.

## Revendications

1. Elément de construction absorbant les chocs et/ou les secousses et constitué d'entretoises, notamment agencé sous la forme d'un protège-moteur avant,
dans lequel l'élément de construction peut être fixé au moyen d'un dispositif de retenue en des points sélectionnés sur les parties de support d'une carrosserie de véhicule automobile et possède un noyau tridimensionnel situé dans les entretoises, et
dans lequel le noyau est entouré par un matériau absorbant l'énergie,
caractérisé en ce
que le noyau (34; 134) est agencé sous la forme d'une ossature s'étendant sur une certaine surface et réalisé en un matériau non métallique,
que le matériau absorbant l'énergie entoure le noyau pour former une section transversale pleine et pénètre par endroits ou même sur toute la surface dans la structure tridimensionnelle du noyau de telle sorte ou forme avec cette structure une liaison telle
que l'ossature, qui s'étend sur une certaine surface, du noyau forme, en liaison avec le matériau (36; 136) qui l'entoure ou pénètre en elle, un élément de construction résistant à la rupture et résistant aux chocs.

2. Elément de construction selon la revendication 1, caractérisé en ce que pour le matériau absorbant l'énergie et pour le matériau du noyau on utilise des matières plastiques homogènes qui, après un processus de fragmentation, peuvent être soumises à un procédé de recyclage sans étape intermédiaire supplémentaire de tri.

3. Elément selon la revendication 1 ou 2, caractérisé en ce que l'ossature non métallique est formée par une structure plane ou de forme tubulaire (38) en forme de tissu ou de tricot, constitué par des fibres de verre, des fibres de matière plastique très résistantes comme par exemple des fibres d'aramide ayant une résistance élevée à l'allongement, une grande solidité et une grande flexibilité et/ou des fibres de carbone et/ou des fibres textiles et qui, à l'intérieur de la section transversale des entretoises, est orientée d'une manière qui correspond au profil de contrainte de l'entretoise concernée (20 à 30; 122 à 130).

4. Elément de construction selon la revendication 3, caractérisé en ce que la structure de tissu ou la structure de tricot est cintrée dans l'espace.

5. Elément de construction selon l'une des revendications 1 à 4, caractérisé en ce que la structure non métallique comporte au moins un écheveau (44), qui est situé dans la section transversale de l'entretoise considérée (30) et qui est constitué par des fibres de verre et/ou des fibres de matière plastique ayant une résistance élevée à l'allongement et/ou une grande solidité et/ou une grande flexibilité, comme par exemple des fibres d'aramide et/ou des fibres de carbone et/ou des fibres textiles, et qui, à l'intérieur de la section transversale de l'entretoise, est orienté et/ou dirigé d'une manière correspondant au profil de contrainte de l'entretoise (30).

6. Elément de construction selon la revendication 5, caractérisé en ce que le au moins un écheveau est ondulé dans la direction longitudinale.

7. Elément de construction selon la revendication 5 ou 6, caractérisé en ce que plusieurs écheveaux (44) et/ou des structures de tissu ou de tricot, planes et/ou de forme tubulaire, sont situés dans la section transversale de l'entretoise (30), la position relative des faisceaux (44) et/ou des structures planes de tissu ou de tricot (34) étant adaptée au profil de contrainte de l'entretoise considérée.

8. Elément de construction selon l'une des revendications 3 à 7, caractérisé en ce que l'ossature est imprégnée d'un milieu, au moyen duquel la liaison avec le matériau enveloppant (36; 136) qui absorbe les chocs, est réglable.

9. Elément de construction selon l'une des revendications 3 à 8, caractérisé en ce que le matériau absorbant les chocs est formé par un système de matière plastique à base de polyuréthane, de préférence un système de mousse de polyuréthane.

10. Elément de construction selon l'une des revendications 3 à 8, caractérisé en ce que le matériau absorbant les chocs est formé par un système à base de polyamide, de préférence un polyamide linéaire aliphatique, tel que le Nylon, qui forme également la base pour la structure de tissu ou de tricot.

11. Elément de construction selon la revendication 9 ou 10, caractérisé en ce que le matériau absorbant les chocs est formé par une masse de matière plastique, dans laquelle sont insérées des fibres de verre et/ou de matière plastique ayant une résistance élevée à l'allongement ou une grande solidité, comme par exemple des fibres d'aramide.

12. Elément de construction selon la revendication 11, caractérisé en ce que la longueur des fibres se situe dans la gamme comprise entre 0,2 et 0,6 mm.

13. Elément de construction selon l'une des revendications 1 à 12, caractérisé en ce que l'ossature est préformée.

14. Elément de construction selon l'une des revendications 1 à 13, caractérisé en ce que les barres d'ossature, qui traversent les différentes entretoises (22 à 30), sont rattachées.

15. Elément de construction selon l'une des revendications 1 à 14, caractérisé en ce que le matériau absorbant les chocs est formé par une masse de mousse.

16. Elément de construction selon les revendications 1 à 14, caractérisé en ce que le matériau absorbant les chocs est formé par une masse de coulée.

17. Procédé pour fabriquer un élément de construction résistant aux chocs et/ou aux secousses et entretoisé selon l'une des revendications 1 à 16, caractérisé par les étapes opératoires suivantes:
mise en forme de l'ossature formée d'un matériau non métallique, qui est résistant à la rupture et aux chocs au moins en liaison avec le matériau qui l'entoure, dans une structure d'âme continue, de préférence sous l'action d'une température et éventuellement après mise en oeuvre d'un procédé d'imprégnation avec un fluide qui règle la configuration intérieure et/ou la liaison avec l'environnement et/ou la stabilité de forme;
fixation de l'ossature dans un moule à l'aide de moyens de retenue perdus; et
enrobage de l'ossature par coulée ou moussage avec une masse qui possède, à l'état solidifié, des caractéristiques d'absorption des chocs et/ou des secousses.

18. Procédé selon la revendication 17, caractérisé en ce que l'enveloppement de l'ossature par coulée s'effectue à l'aide d'un système de matière plastique à plusieurs constituants.

19. Procédé pour fabriquer un élément de construction résistant aux chocs et/ou aux secousses et entretoisé, selon l'une des revendications 1 à 16, caractérisé par les étapes opératoires suivantes:
mise en forme de l'ossature en utilisant un matériau non métallique, qui résiste à la rupture et aux chocs au moins en liaison avec un matériau qui l'enveloppe; et
enveloppement couche par couche de l'ossature avec un matériau absorbant les chocs, jusqu'à ce que la section transversale de consigne de l'entretoise considérée soit atteinte.

20. Procédé selon la revendication 19, caractérisé en ce que d'autres couches d'un matériau résistant à la rupture et/ou aux chocs sont déposées entre les couches formées du matériau absorbant les chocs.

21. Elément de construction selon les revendications 1 à 16, en tant que protège-moteur avant équipé d'un dispositif de retenue associé sur le véhicule et comportant des éléments de retenue pouvant être ancrés dans l'élément de construction comme par exemple des plaques, des broches ou analogues, caractérisé en ce que les éléments de retenue sont fixés à des éléments (50, 60) absorbant les chocs, qui présentent un comportement prédéterminé de déformation et/ou d'absorption des chocs.
